# EUROPÄISCHE PATENTSCHRIFT

(11) **EP 3 058 645 B1**
(45) Veröffentlichungstag und Bekanntmachung des Hinweises auf die Patenterteilung: **07.02.2018**
(21) Anmeldenummer: 14786601.6
(22) Anmeldetag: 05.09.2014
(51) Int. Cl.: H02K 15/12

(54) **VORRICHTUNG ZUM IMPRÄGNIEREN VON WICKLUNGSSTÄBEN FÜR ELEKTRISCHE MASCHINEN**
DEVICE FOR IMPREGNATING WINDING BARS FOR ELECTRIC MACHINES
DISPOSITIF PERMETTANT L'IMPRÉGNATION DE BARRES D'ENROULEMENT POUR MOTEURS ÉLECTRIQUES

(30) Priorität: 18.10.2013 DE 102013017305; 15.11.2013 DE 102013019051
(43) Veröffentlichungstag der Anmeldung: 24.08.2016
(73) Patentinhaber: PETT & P.E.T.T. Trade & Industry Products GmbH, 55288 Udenheim (DE)
(72) Erfinder: PETT, Bertram, 55288 Udenheim (DE)
(74) Vertreter: Schleitzer, Dirk-Karsten
(86) Internationale Anmeldenummer: PCT/EP2014/002407
(87) Internationale Veröffentlichungsnummer: WO 2015/055265

(56) Entgegenhaltungen:
- EP-A1- 0 831 575
- CH-A1- 700 572
- DE-A1- 1 613 441
- DE-A1- 19 962 290
- JP-A- S 648 846
- US-A- 1 595 838

## Beschreibung

Die Erfindung betrifft eine Vorrichtung zum Imprägnieren von wenigstens einem eine Isolierung aufweisenden Wicklungsstab für eine elektrische Maschine, insbesondere zum Imprägnieren von wenigstens einem Statorstab für einen Stator eines Generators oder einer anderen elektrodynamischen Maschine, mit einem wenigstens ein Werkzeugoberteil und wenigstens ein Werkzeugunterteil aufweisenden Werkzeug zur Aufnahme von wenigstens einem Wicklungsstab in wenigstens einer im miteinander verbundenen Zustand von Werkzeugoberteil und Werkzeugunterteil vorhandenen Werkzeugkavität bzw. einem Werkzeugnest des Werkzeugs, wobei die Werkzeugkavität insbesondere nach Belegung mit einem Vakuum für einen Imprägniervorgang des Wicklungsstabes mit einem Imprägniermittel befüllbar ist, wobei das Imprägniermittel mit einem vorgebbaren Druck in die Werkzeugkavität einströmt und das Werkzeug den Wicklungsstab beim Imprägniervorgang und bei der vorzugsweise vorab vorgesehenen Evakuierung der Werkzeugkavität formschlüssig umgibt und wobei, vorzugsweise, das Werkzeugunterteil über einen Werkzeugträger auf einen Untergrund aufstellbar ist

Das Dokument US 1 595 838 A offenbart eine Vorrichtung zum Imprägnieren von wenigstens einem eine Isolierung aufweisenden Wicklungsstab für eine elektrische Maschine, die ein wenigstens ein Werkzeugoberteil und wenigstens ein Werkzeugunterteil aufweisendes Werkzeug zur Aufnahme von einem Wicklungsstab in einer Werkzeugkavität aufweist. Die Werkzeugkavität ist für einen Imprägniervorgang des Wicklungsstabes mit einem Imprägniermittel befüllbar. Das Werkzeug umgibt den Wicklungsstab beim Imprägniervorgang formschlüssig.

Die Wicklungen elektrischer Maschinen, in denen die Abmessungen der Wicklungen eine vorgegebene Größe überschreiten, sind im Allgemeinen aus Leiterstäben aufgebaut. Ein elektrischer Generator beispielsweise besteht im Wesentlichen aus zwei Teilen, einem Ständer oder Stator als feststehendem Teil und einem innerhalb des Ständers angeordneten Rotor oder Läufer Ein Ständerwickelkopf des Ständers besteht aus einer Vielzahl von Wicklungsstäben, die elektrisch miteinander verschaltet sind. Der Stabsatz eines Generators kann Oberlagestäbe und Unterlagestäbe aufweisen, wobei jeweils ein Oberlagestab und ein Unterlagestab elektrisch miteinander verbunden sind. Zur Stromableitung am Generatorkopf können darüber hinaus Schaltstäbe vorgesehen sein. Wicklungsstäbe der in Rede stehenden Art weisen in der Regel einen gerade ausgebildeten in der Nut der elektrischen Maschine gehaltenen Nutabschnitt und vorzugsweise beidseitig daran anschließende gekrümmte, insbesondere evolventenförmig oder ähnlich ausgebildete Bügelabschnitte auf, die zum Wickelkopf gehören und im Wesentlichen an geradlinige Endabschnitte des Wicklungsstabes an den Stabenden angrenzen können. In diesem Zusammenhang ist ferner bekannt, Wicklungen von Wechselstrommaschinen so auszubilden, dass die Bügelabschnitte der Leiterstäbe auf Kegelflächen geführt sind, wobei Kegel mit einem geringen Neigungswinkel der Größenanordnung von 10 bis 20 ° üblich sind.

Es ist weiter bekannt, dass Leiterstäbe für Statorwicklungen von elektrischen Maschinen mit einer Isolierung versehen werden müssen, bevor sie in die hierfür vorgesehenen Nuten des Stators eingesetzt werden können. Die Isolierung der Leiterstäbe besteht üblicherweise aus einer Umwicklung mit einem glimmerhaltigen Isolierband bzw. aus einem Glimmerband, welches mit einem Imprägnierfluid getränkt wird. Das Imprägnierfluid besteht vorzugsweise aus einem aushärtbaren Kunstharz und dient einerseits zur Fixierung der Isolierwicklung sowie andererseits zur Verbesserung der Isolierung, indem eine mögliche Feuchtigkeitsaufnahme hierdurch verhindert wird.

Aus der EP 1 959 545 B1 ist eine Einrichtung zum Imprägnieren einer Isolation eines Wicklungsstabes einer elektrischen Maschine bekannt, mit einem den Wicklungsstab aufnehmenden Behälter, der mit einem ein Imprägniermittel enthaltenden Tank verbunden ist, wobei der Innenraum des Behälters mit einem Vakuum belegbar ist und das Imprägniermittel mit einem vorgebbaren Druck in den Behälter einfließt. Der Behälter kann ein aus mehreren Teilen zusammengesetztes, den Wicklungsstab beim Evakuier- und Imprägniervorgang formschlüssig umgebendes Werkzeug sein, wobei mit einer Werkzeugkavität für den Wicklungsstab eine Leitung einer vakuumbildenden Anlage verbunden ist und wobei das Werkzeug aus einem Oberteil und einem Unterteil besteht, die unter Zwischenschaltung einer umlaufenden Dichtung durch eine Schraubverbindung kraftschlüssig miteinander verbunden sind. Zur Unterstützung des Imprägnier- oder Aushärtevorgangs sind Heiz- oder Kühlsysteme in Kanälen des Werkzeugs angeordnet. Das Werkzeug ist beim Evakuieren und beim Befüllen mit Imprägnierharz vollständig geschlossen, so dass der Austritt von Emissionen vermieden wird. Die Stäbe in einem Stabsatz einer elektrischen Maschine, wie Oberlage-, Unterlage- und Schaltstäbe, können unterschiedliche Stabgeometrien bzw. Stabkonturen an Stabenden und/oder unterschiedliche Längen aufweisen, was auf unterschiedliche Kegellängen zurückzuführen sein kann. Die Vielzahl möglicher Stabgeometrieabweichungen und unterschiedliche Längen der Stäbe sind jedoch für eine rationelle Imprägnierung der Wicklungsstäbe hinderlich.

Aufgabe der vorliegenden Erfindung ist es daher, ausgehend von dem aus der EP 1 959 545 B1 bekannten Werkzeug eine weitergebildete Vorrichtung zum Imprägnieren von Wicklungsstäben für elektrische Maschinen zur Verfügung zu stellen, die die Durchführung des Imprägnierprozesses bei geringen Rüst- und Prozesszeiten und daraus resultierend geringen Prozesskosten bei gleichzeitig geringen Werkzeugkosten ermöglicht. Insbesondere ist es Aufgabe der vorliegenden Erfindung, eine Vorrichtung der eingangs genannten Art zur Verfügung zu stellen, die bei geringen Rüst- und Prozesszeiten sowie geringen Prozess- und Werkzeugkosten das Imprägnieren von Wicklungsstäben, insbesondere Oberlage-, Unterlage- und Schaltstäben einer Startorwicklung für elektrische Maschinen, wie Generatoren, mit unterschiedlicher Geometrie und/oder unterschiedlicher Kontur der Stäbe im Bereich der Stabenden, und/oder mit unterschiedlicher (Kegel-)Länge in einfacher Weise zulässt. Darüber hinaus soll das Heiz- oder Kühlsystem der Vorrichtung zur Unterstützung des Imprägnier- oder Aushärtevorgangs in einfacher Weise eine exakte Temperaturregulierung ermöglichen.

Die vorgenannte Aufgabe wird durch eine Vorrichtung mit den Merkmalen von Patentanspruch 1 gelöst.

Erfindungsgemäß ist wenigstens ein lösbar mit dem Werkzeugoberteil oder dem Werkzeugunterteil verbindbares Einsatzstück für ein Stabende des Wicklungsstabes in wenigstens einem beim Imprägniervorgang das Stabende des Wicklungsstabes aufnehmenden Abschnitt der Werkzeugkavität, bei Statorstäben beispielsweise nahe der Schaltöse der Wicklungsstäbe, vorgesehen, wobei das Einsatzstück eine bereichsweise zur Oberflächengeometrie des Stabendens komplementäre Oberflächengeometrie aufweist und wobei das Stabende beim Imprägniervorgang gegen das Einsatzstück anliegt und über das Einsatzstück an dem Werkzeugoberteil oder an dem Werkzeugunterteil gegengeformt bzw. abgestützt ist. Das Einsatzstück dient in der Art eines Distanzstücks dazu, sicherzustellen, dass das Stabende beim Imprägniervorgang ausreichend gegengeformt bzw. abgestützt ist. Eine komplementäre Oberflächengeometrie des Einsatzstücks ermöglicht in diesem Zusammenhang eine zumindest bereichsweise, vorzugsweise passgenaue, Anlage des Stabendes gegen das Einsatzstück während des Imprägniervorgangs. Hierdurch wird eine hohe Maßhaltigkeit des Wicklungsstabes während des Imprägnier- und Abkühlvorgangs sichergestellt. Durch Verwendung von unterschiedlichen Einsatzstücken können Wicklungsstäbe mit unterschiedlicher Geometrie und/oder unterschiedlicher Kontur der Stabenden mit dem gleichen Werkzeug imprägniert werden, beispielsweise Schaltstäbe und Oberlage- bzw. Unterlagestäbe für die Starterwicklung einer elektrischen Maschine, insbesondere eines Generators. Die Erfindung betrifft in diesem Zusammenhang auch ein System mit einer Vorrichtung der erfindungsgemäßen Art und mit mehreren unterschiedlichen Einsatzstücken, wobei die Einsatzstücke eine unterschiedliche Dimensionierung und/oder eine unterschiedliche Oberflächengeometrie und/oder eine unterschiedliche Kontur aufweisen und wobei bedarfsweise unterschiedliche Einsatzstücke mit dem Werkzeugoberteil und/oder mit dem Werkzeugunterteil verbindbar sind.

Die Einsatzstücke sind lösbar mit dem Werkzeugoberteil oder dem Werkzeugunterteil verbunden, beispielsweise verschraubt, so dass es bedarfsweise möglich ist, das Einsatzstück zu demontieren und ein anders ausgebildetes Einsatzstück zu montieren.

Zum Abstützen des Stabendes kann wenigstens ein Einsatzstück am Werkzeugunterteil und/oder wenigstens ein Einsatzstück am Werkzeugoberteil befestigt sein. Bei Wicklungsstäben mit beidseitig vorgesehenen Bügelabschnitten kann wenigstens ein Einsatzstück auf der Seite des einen Stabendes und/oder wenigstens ein Einsatzstück auf der Seite des anderen Stabendes vorgesehen sein. In Abhängigkeit von der Stabgeometrie bzw. der Stabkontur am Stabende ist es jedoch auch möglich, dass wenigstens ein Stabende beim Imprägniervorgang unmittelbar gegen das Werkzeugoberteil oder das Werkzeugunterteil anliegt und somit ein Einsatzstück nicht erforderlich ist.

Das Werkzeug ist vorzugsweise als Doppelwerkzeug ausgebildet und ermöglicht das gleichzeitige Imprägnieren von zwei Stäben, beispielsweise eines Oberlagestabes und eines Unterlagestabes eines Stabsatzes. Die Auslegung als Doppelstabwerkzeug hat sich hier als besonders wirtschaftlich erwiesen.

Beim Imprägniervorgang kommt das Einsatzstück mit einer Flachseite und/oder quer dazu gegen das Stabende zur Anlage. Vorzugsweise weist das Einsatzstück wenigstens einen ersten Auflageabschnitt mit einer zu einem geradlinigen Endabschnitt des Wicklungsstabes komplementären Oberflächengeometrie und/oder Oberflächenkontur und wenigstens einen daran angrenzenden zweiten Auflageabschnitt mit einer Oberflächengeometrie auf, die komplementär zur Oberflächengeometrie des Wicklungsstabes im Übergangsbereich von einem gekrümmten, insbesondere evolventenförmig oder ähnlich ausgebildeten Bügelabschnitt des Wicklungsstabes zu dem geradlinigen Endabschnitt des Wicklungsstabes ist. Beim Imprägniervorgang liegt der Wicklungsstab dann mit seinem Stabende im Übergangsbereich vom Bügelabschnitt zum geradlinigen Endabschnitt des Wicklungsstabes und im Bereich des geradlinigen Endabschnitts gegen das Einsatzstück an und wird somit im Bereich seines Stabendes ausreichend gegengeformt. Dadurch kann eine hohe Maßhaltigkeit des Wicklungsstabes beim Imprägnierprozess sichergestellt werden.

Darüber hinaus kann das Einsatzstück einen Befestigungsabschnitt, beispielsweise eine Befestigungslasche, aufweisen, die es zulässt, das Einsatzstück an dem Werkzeugoberteil oder dem Werkzeugunterteil zu befestigen, insbesondere über eine Schraubverbindung.

Zur Lösung der eingangs genannten Aufgabe kann vorgesehen sein, dass das Werkzeug wenigstens zwei im Bereich einer Teilungsebene des Werkzeugs lösbar miteinander verbundene und in Längsrichtung des Werkzeugs nebeneinanderliegend angeordnete Werkzeugoberteile und wenigstens zwei lösbar miteinander verbundene und in Längsrichtung des Werkzeugs nebeneinanderliegend angeordnete Werkzeugunterteile aufweist, wobei im Bereich der Teilungsebene des Werkzeugs lösbar miteinander verbundene Werkzeugoberteile und Werkzeugunterteile Teilabschnitte der Werkzeugkavität bilden und wobei die Werkzeugkavität durch Einbringen von wenigstens einem Zwischenstück zwischen benachbarte Werkzeugoberteile und/oder zwischen benachbarte Werkzeugunterteile in Längsrichtung der Werkzeugkavität und insbesondere quer zur Teilungsebene verlängerbar ausgebildet ist. Bei dieser Ausführungsform der Erfindung lässt es das Werkzeug zu, Stäbe mit unterschiedlicher Kegellänge gleichermaßen zu imprägnieren, wobei sich die Werkzeugkavität durch Einsetzen von wenigstens einem Zwischenstück zwischen benachbarte trennbar miteinander verbundene Werkzeugabschnitte verlängern lässt, um bedarfsweise kürzere oder längere Wicklungsstäbe zu imprägnieren. Es versteht sich, dass durch die Anzahl der verwendeten Zwischenstücke und deren Dimensionierung bedarfsweise die Länge der Werkzeugkavität mehr oder weniger stark verändert werden kann. Bei dieser Ausführungsform der Erfindung ist das Werkzeug vorzugsweise als Einzelwerkzeug ausgebildet.

Die Teilungsebene verläuft vorzugsweise durch einen gekrümmten, evolventenförmig oder ähnlich ausgebildeten Abschnitt der Werkzeugkavität, der beim Imprägniervorgang den Bügelabschnitt des Wicklungsstabes aufnimmt. Weiter insbesondere verläuft die Teilungsebene durch den Einsatzpunkt der Krümmung des gekrümmten Abschnitts der Werkzeugkavität am Ende eines geradlinigen Abschnitts der Werkzeugkavität, wobei der geradlinige Abschnitt der Werkzeugkavität beim Imprägniervorgang den Nutabschnitt des Wicklungsstabes aufnimmt. Hierbei kann die Teilungsebene beispielsweise einen Winkel zwischen 10° und 30°, vorzugsweise von 20°, zur Horizontalen aufweisen, was dem Neigungswinkel des Kegels bei Führen des Leiterstabes im Wickelkopfbereich auf einer Kegelfläche entspricht. Die Teilungsebene verläuft dabei vorzugsweise durch den Kegeleinsatzpunkt. Die Ausgestaltung des Werkzeugs lässt es hierbei zu, an wenigstens einem Ende des Werkzeugs einen Teilbereich des Werkzeugs, der mit wenigstens einem Werkzeugoberteil und mit wenigstens einem Werkzeugunterteil bei Imprägniervorgang einen Teilabschnitt der Werkzeugkavität bildet, gegenüber einem benachbarten Werkzeugoberteil und einem benachbarten Werkzeugunterteil des Werkzeugs entlang einer Schräge unter Beibehaltung des Neigungswinkels des Kegels zu verstellen bzw. zu verschieben, um ein oder mehrere Zwischenstücke zwischen die Werkzeugteile einbringen zu können.

In diesem Zusammenhang kann eine Verstelleinrichtung vorhanden und benachbarte Werkzeugoberteile und benachbarte Werkzeugunterteile können mit der Verstelleinrichtung relativ zueinander verstellbar und dicht miteinander in Verbindung bringbar sein. Die Verstelleinrichtung kann eine Mehrzahl von vorzugsweise seitlich und lediglich an den Werkzeugoberteilen und/oder an den Werkzeugunterteilen gehaltene Linearantriebe, insbesondere eine Mehrzahl von hydraulischen oder pneumatischen Kolbenzylindereinheiten, aufweisen. Dies ermöglicht das Umrüsten des Werkzeugs von einer Stablänge auf eine andere Stablänge bei geringem Zeitaufwand. In diesem Zusammenhang ist es weiter vorzugsweise so, dass benachbarte Werkzeugoberteile und benachbarte Werkzeugunterteile unabhängig voneinander relativ zueinander verstellbar und dicht miteinander in Verbindung bringbar sind.

Um die Rüstzeiten beim Imprägnierprozess weiter zu verringern, sieht eine weiter bevorzugte Ausführungsform der Erfindung vor, dass eine Anhebe- und Absenkeinrichtung vorhanden und das Werkzeugoberteil und das Werkzeugunterteil mit der Anhebe- und Absenkeinrichtung relativ zueinander (vertikal) höhenverstellbar und dicht miteinander in Verbindung bringbar sind, wobei die Anhebe- und Absenkeinrichtung eine Mehrzahl von vorzugsweise seitlich und lediglich an dem Werkzeugoberteil und/oder an dem Werkzeugunterteil gehaltene Linearantriebe, insbesondere eine Mehrzahl von hydraulischen oder pneumatischen Kolbenzylindereinheiten aufweist. Das Anheben und/oder Absenken des Werkzeugoberteils relativ zu dem Werkzeugunterteil kann somit unabhängig von der Verbindung des Werkzeugunterteils mit einem Werkzeugträger oder Boden erfolgen, wobei das Werkzeugoberteil erfindungsgemäß lediglich gegen das Werkzeugunterteil verspannt wird, und nicht mehr direkt gegen den Werkzeugträger oder den Boden, so wie dies im Stand der Technik vorgesehen ist. Dadurch lassen sich die im Stand der Technik auftretenden Probleme aufgrund einer Relativbewegung zwischen dem Werkzeug und dem Werkzeugträger beim Imprägniervorgang und beim anschließenden Abkühlvorgang vermeiden. Der Werkzeugträger kann hierbei unbefestigt oder befestigt auf dem Boden aufstehen und erfüllt erfindungsgemäß lediglich eine Abstellfunktion für das Werkzeug.

Die zum Anheben und Absenken des Werkzeugoberteils erforderlichen Baueinheiten und Aggregate sind an dem Werkzeug selbst befestigt bzw. gehalten und nicht unmittelbar (körperlich) mit dem Werkzeugträger verbunden. An dem Werkzeugunterteil kann beispielsweise eine Mehrzahl von hydraulischen oder pneumatischen Kolbenzylindereinheiten, vorzugsweise auf beiden Längsseiten, gehalten sein, wobei das Werkzeugoberteil mit einem Kran von oben auf ausgefahrene Stellkolben der Kolbenzylindereinheiten absenkbar und nach dem Verriegeln der Stellkolben an dem Werkzeugoberteil durch Absenken der Stellkolben dicht gegen das Werkzeugunterteil bringbar ist. An dem Werkzeugoberteil sind dann seitliche Halteöffnungen für die Stellkolben vorgesehen, wobei das Werkzeugoberteil, beispielsweise mit einer Kranvorrichtung, so auf das Werkzeugunterteil von oben absenkbar ist, dass die Köpfe der Stellkolben in die Halteöffnungen eingreifen. Anschließend können dann die Stellkolben mittels Verschlussschiebern im Bereich der Stellkolbenköpfe verriegelt werden, so dass es durch Einfahren der Stellkolben möglich ist, das Werkzeugoberteil gegen das Werkzeugunterteil zu verspannen und das Werkzeugoberteil und das Werkzeugunterteil dicht gegeneinander zu bringen. Es versteht sich, dass zwischen den Werkzeugteilen Dichtungen eingelegt werden können, um eine ausreichende Dichtheit der Werkzeugkavität(en) zu erreichen. Diese Ausführungsform des Werkzeugs zeichnet sich durch die Möglichkeit aus, das Werkzeugoberteil sehr präzise auf das Werkzeugunterteil abzusenken und gleichzeitig über die Stellkolben fest mit dem Werkzeugunterteil zu verbinden bzw. gegen das Werkzeugunterteil zu verspannen.

Es ist zweckmäßig, wenn das Werkzeugoberteil eine Entformungsschräge am Werkzeugunterteil nach dem Verriegeln der Stellkolben an dem Werkzeugoberteil und vor dem Absenken der Stellkolben zwischen 10 bis 50 %, vorzugsweise zwischen 20 bis 40 %, insbesondere zu ca. 33 %, überdeckt, jeweils mit Bezug auf die Länge der Entformungsschräge. Bei einem kleineren minimalen Abstand zwischen dem Werkzeugoberteil und dem Werkzeugunterteil beim Aufsetzen des Werkzeugoberteils auf die Stellzylinder kann es leicht zu Beschädigungen der Stäbe und der Stabisolierung beim Aufsetzen kommen. Ist der Abstand zwischen den Werkzeugteilen beim Aufsetzen des Werkzeugoberteils auf die ausgefahrenen Stellzylinder größer, kann es zu Problemen beim kontrollierten Schließen der Werkzeugteile durch Einfahren der Zylinder und zu einer erhöhten Biegebelastung der Zylinder kommen.

Das Werkzeug kann in Längsrichtung des Werkzeugs schwimmend mit einem Werkzeugträger verbunden und über den Werkzeugträger auf dem Boden aufgestellt sein. Vorzugsweise weist der Werkzeugträger eine Mehrzahl von in Längsrichtung des Werkzeugs voneinander beabstandete Trägerteile auf. Das Aufstellen des Werkzeugs wird dadurch vereinfacht und erfordert einen lediglich geringen Zeitaufwand.

Um eine möglichst exakte Temperaturregelung beim Imprägniervorgang und beim nachfolgenden Abkühlvorgang in einfacher Weise zu erreichen, ist es zweckmäßig, wenn in dem Werkzeugoberteil und/oder in dem Werkzeugunterteil jeweils ein Wärmeträgerkanal für ein Wärmeträgermedium, vorzugsweise ein Thermoöl, vorgesehen ist, wobei der Wärmeträgerkanal über eine Mehrzahl von in Längsrichtung des Werkzeugs nachfolgende Vorlauföffnungen mit wenigstens einer Vorlaufleitung für das Wärmeträgermedium und über eine Mehrzahl von in Längsrichtung des Werkzeugs nachfolgende Rücklauföffnungen mit wenigstens einer Rücklaufleitung für das Wärmeträgermedium verbunden ist. Die Heizungsauslegung erfolgt als Labyrinthkanal.

Um in konstruktiv einfacher Weise eine gleichmäßige Temperaturverteilung über die Länge der Werkzeugkavität zu erreichen, kann sich der Strömungsdurchmesser der nachfolgenden Vorlauföffnungen und/oder der nachfolgenden Rücklauföffnungen in Längsrichtung des Werkzeugs bzw. in Strömungsrichtung des Wärmeträgermediums im Leitkanal derart ändern, dass ein im Wesentlichen konstantes Volumenstromverhältnis von in den Wärmeträgerkanal einströmendem und aus dem Wärmeträgerkanal ausströmendem Wärmeträgermedium über die Länge des Werkzeugs erreicht wird. Vorlauföffnungen und Rücklauföffnungen können in Längsrichtung des Werkzeugs beispielsweise abwechselnd nachfolgend angeordnet sein, wobei jeder Vorlauföffnung eine Rücklauföffnung zugeordnet ist und eine Vorlauföffnung und eine dieser Vorlauföffnung zugeordnete Rücklauföffnung paarweise für das Einströmen und Ausströmen des Wärmeträgermediums in den Leitkanal zusammenwirken. Der Durchmesser der Vorlauföffnungen und der Rücklauföffnungen kann sich paarweise, d.h. von einer ersten Vorlauföffnung mit einem ersten Durchmesser und der dieser zugeordneten ersten Rücklauföffnung (ebenfalls mit dem ersten Durchmesser) zu einer nachfolgenden zweiten Vorlauföffnung mit einem zweiten Durchmesser und der dieser zugeordneten zweiten Rücklauföffnung (ebenfalls mit dem zweiten Durchmesser) usw., vorzugsweise über die gesamte Länge des Werkzeugs ändern.

Die vorhergehend gewählte und nachfolgend gewählte Absatzformatierung des Anmeldungstextes soll zu keiner Beschränkung des Offenbarungsgehaltes des Anmeldungstextes führen. Alle in einem Textabsatz offenbarten Merkmale können unabhängig voneinander und/oder in Kombination mit Merkmalen aus anderen Textabsätzen bei einer erfindungsgemäßen Vorrichtung verwirklicht sein.

Es versteht sich, dass die zuvor beschriebenen Ausführungsformen miteinander kombiniert werden können, auch wenn dies nicht im Einzelnen ausdrücklich beschrieben ist. Weitere Vorteile, Merkmale und Eigenschaften und Aspekte der vorliegenden Erfindung ergeben sich aus der folgenden Beschreibung bevorzugter Ausführungsformen anhand der Zeichnung. Es zeigen:
- Fig. 1 bis 8: perspektivische Ansichten, z.T. Teilansichten, einer ersten Ausführungsform einer erfindungsgemäßen Vorrichtung zum Imprägnieren von isolierten Wicklungsstäben,
- Fig. 9 bis 13 und 15: perspektivische Ansichten, z.T. Teilansichten, einer zweiten Ausführungsform einer erfindungsgemäßen Vorrichtung zum Imprägnieren von isolierten Wicklungsstäben,
- Fig. 14: eine schematische Darstellung von Wicklungsstäben mit unterschiedlicher Kegellänge der Wicklungsstäbe,
- Fig. 16: eine schematische Querschnittsansicht eines Werkzeugoberteils und eines Werkzeugunterteils mit einem zwischen den Werkzeugteilen positionierten Wicklungsstab vor dem Absenken des Werkzeugoberteils auf das Werkzeugunterteil und
- Fig. 17: eine schematische Darstellung eines Heiz- und/oder Kühlsystems einer erfindungsgemäßen Vorrichtung.

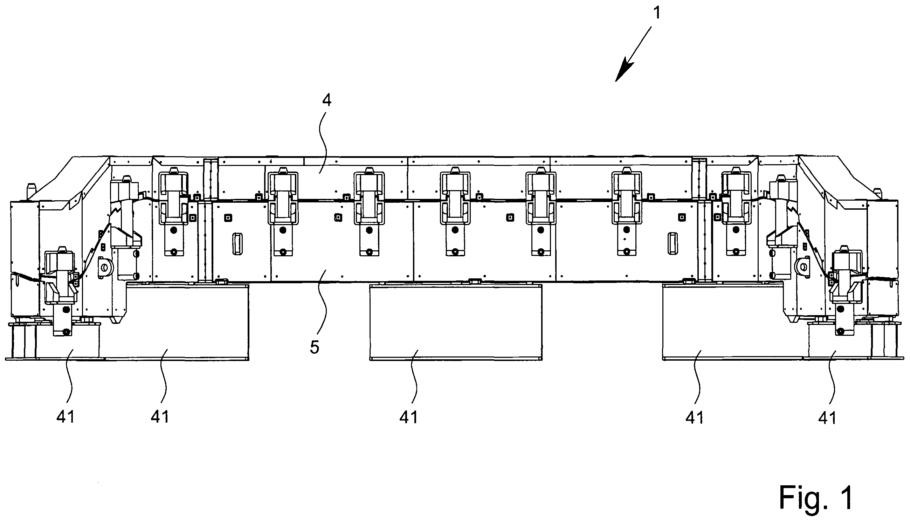

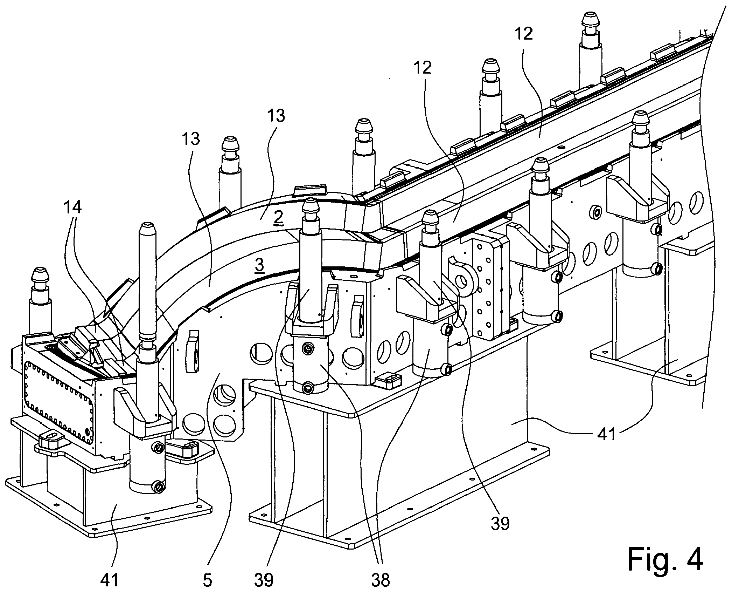

In den Figuren 1 bis 4 ist eine Vorrichtung 1 zum Imprägnieren von zwei Wicklungsstäben 2, 3 für eine elektrische Maschine perspektivisch gezeigt. Die Vorrichtung 1 weist ein Werkzeug mit wenigstens einem Werkzeugoberteil 4 und wenigstens einem Werkzeugunterteil 5 auf zur Aufnahme der Wicklungsstäbe in zwei nicht dargestellten Werkzeugkavitäten bzw. Werkzeugnestern, die im verbundenen Zustand der Werkzeugteile 4, 5 zwischen dem Werkzeugoberteil 4 und dem Werkzeugunterteil 5 vorhanden sind. Das Werkzeug ist als Doppelwerkzeug für je einen Unterlagestab und einen Oberlagestab ausgebildet. Es versteht sich, dass das Werkzeug auch als Einzelwerkzeug ausgebildet sein kann oder dass bei einer entsprechenden konstruktiven Ausgestaltung mit mehr als zwei Werkzeugkavitäten mehr als zwei Wicklungsstäbe 2, 3 gleichzeitig imprägniert werden können. Die Werkzeugkavitäten sind evakuierbar und für den Imprägniervorgang mit einem Imprägniermittel befüllbar, wobei das Werkzeug die Wicklungsstäbe 2, 3 beim Imprägniervorgang formschlüssig umgibt.

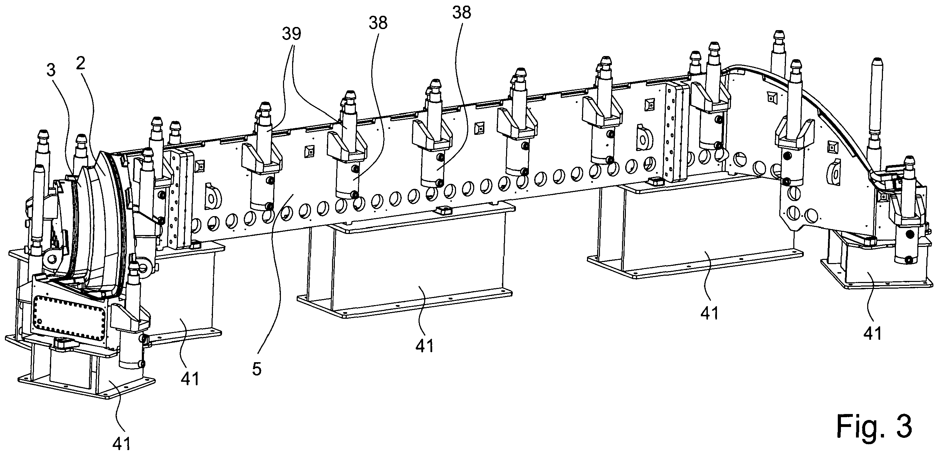

Ein mögliches Verfahren zum Imprägnieren von Wicklungsstäben 2 ,3 sowie ein Überwachungs- und Steuersystem für eine Imprägniervorrichtung sind in der DE 10 2011 013 439 A1 beschrieben. Der Offenbarungsgehalt der DE 10 2011 013 439 A1 wird hiermit in den Offenbarungsgehalt der vorliegenden Anmeldung voll umfänglich einbezogen. Der Imprägniervorgang der Wicklungsstäbe 2, 3 kann dabei wie folgt ablaufen. Bei der Imprägnierung handelt es sich um einen geschlossenen Prozess. Zu Prozessbeginn ist das Werkzeugoberteil 4 in ein Drehgestell eingesetzt. Das Werkzeugoberteil 4 und das Werkzeugunterteil 5 werden mit einem Trennmittel beschichtet. Mit einem Kran werden dann die Wicklungsstäbe 2, 3 in das vorgeheizte Werkzeugunterteil 5 eingelegt. Danach wird das Werkzeugoberteil 4 mit dem Kran auf das Werkzeugunterteil 5 gelegt und hydraulisch verschlossen. Die auf das Werkzeugunterteil 5 aufgelegten Wicklungsstäbe 2, 3 sind in Fig. 3 gezeigt, wobei Fig. 3 das Werkzeugunterteil 5 vor dem Aufsetzen des Werkzeugoberteils 4 auf das Werkzeugunterteil 5 zeigt. Bei den Wicklungsstäben 2, 3 kann es sich um Oberlage- und Unterlagestäbe oder um Schaltstäbe eines Stabsatzes für eine elektrische Maschine, insbesondere für einen elektrischen Generator, handeln.

Anschließend beginnt der eigentliche Imprägnierprozess, der weitgehend automatisiert abläuft. Nach einer vorgegebenen Evakuierungszeit werden das Werkzeug und ein Materialbehälter für das Imprägniermittel mit Vakuum beaufschlagt. Nach Kontrolle der Vakuumstabilität wird das Imprägniermittel in die Werkzeugkavitäten des Werkzeugs injiziert. Wenn die Harzaufnahme beendet ist, wird automatisch die Temperatur des Werkzeugs über eine festgelegte Zeitdauer erhöht. Nach Ablauf der Ausbackdauer wird das Werkzeug abgekühlt und nach Erreichen einer vorgegebenen Abkühltemperatur kann das Werkzeug zur Stabentnahme geöffnet werden. Die Entnahme der Wicklungsstäbe 2, 3 erfolgt dann in umgekehrter Reihenfolge, wobei zunächst mit einem Kran das Werkzeugoberteil 4 abgenommen und in das Drehgestell abgelegt wird. Anschließend werden die Werkzeugstäbe 2, 3 entnommen, Trennlitze sowie das Imprägnierungsmittel an den Ösen der Wicklungsstäbe 2, 3 entfernt und das Werkzeugunterteil 5 sowie das Werkzeugoberteil 4 werden von Resten des Imprägniermittels gereinigt. Es schließt sich die erneute Beschichtung der die Werkzeugkavitäten bildenden Innenflächen von Werkzeugoberteil 4 und Werkzeugunterteil 5 mit dem Trennmittel an. Ein erneuter Imprägniervorgang kann folgen.

Die Wicklungsstäbe 2, 3 können gerade ausgebildete in der Nut einer elektrischen Maschine zu haltende Nutabschnitte 12 und vorzugsweise beidseitig daran anschließende gekrümmte, insbesondere evolventenförmig oder ähnlich ausgebildete Bügelabschnitte 13 aufweisen, die in einen geradlinigen Endabschnitt 14 übergehen können.

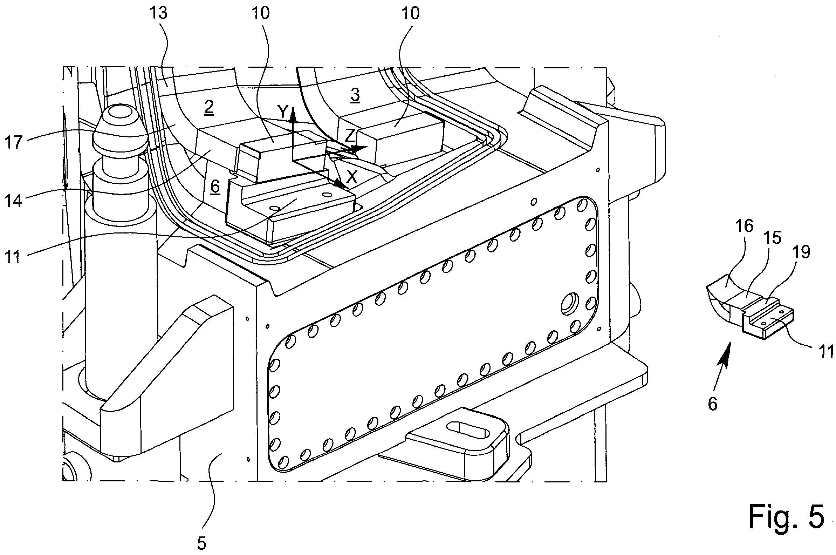

Wie sich insbesondere aus den Fig. 5 bis 8 ergibt, können lösbar mit dem Werkzeugoberteil 4 oder dem Werkzeugunterteil 5 verbindbare bzw. verbundene Einsatzstücke 6 - 9 für die Stabenden der Wicklungsstäbe 2, 3 vorgesehen sein. Mit Hilfe von Einsatzstücken 6 - 9 lassen sich unterschiedliche Geometrien bzw. Konturen der Wicklungsstäbe 2, 3 im Bereich der Stabenden darstellen. Die Einsatzstücke 6 - 9 sind dazu in den Bereichen der Werkzeugkavitäten anzuordnen, die beim Imprägniervorgang die Stabenden der Wicklungsstäbe 2, 3 aufnehmen. Jedes Einsatzstück 6 - 9 weist eine bereichsweise zur Oberflächengeometrie des jeweiligen Stabendes komplementäre Oberflächengeometrie auf, wobei die Stabenden beim Imprägniervorgang gegen die Einsatzstücke 6 - 9 anliegen und über die Einsatzstücke 6 - 9 an dem Werkzeugoberteil 4 bzw. an dem Werkzeugunterteil 5 gegengeformt bzw. abgestützt sind.

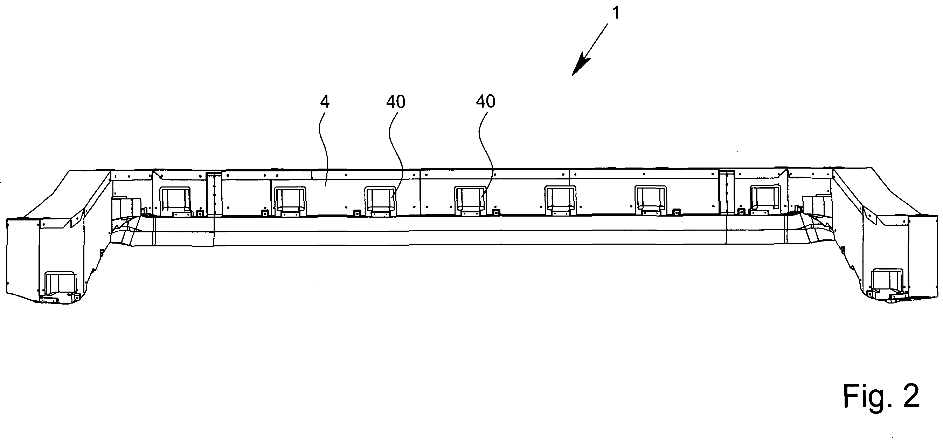

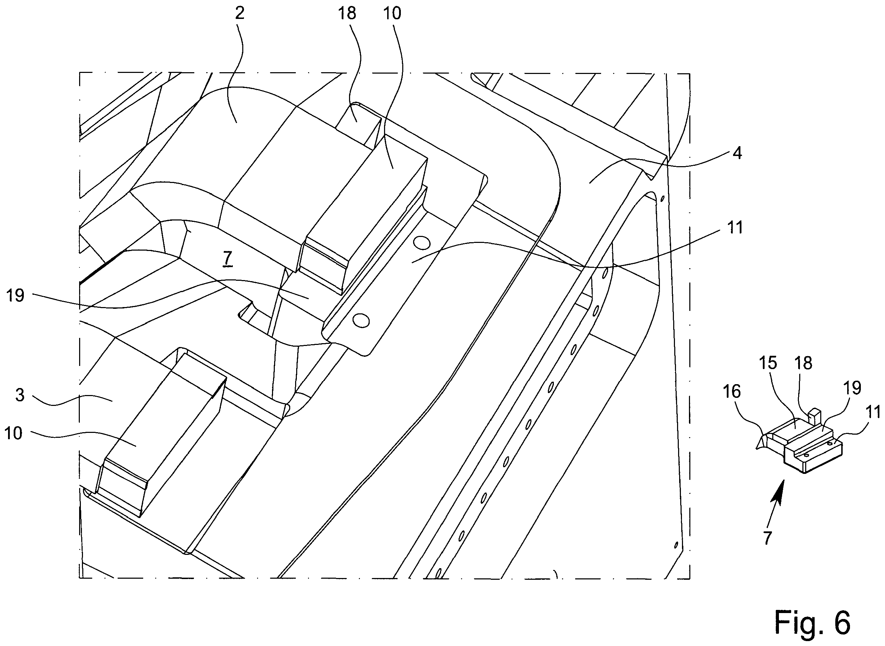

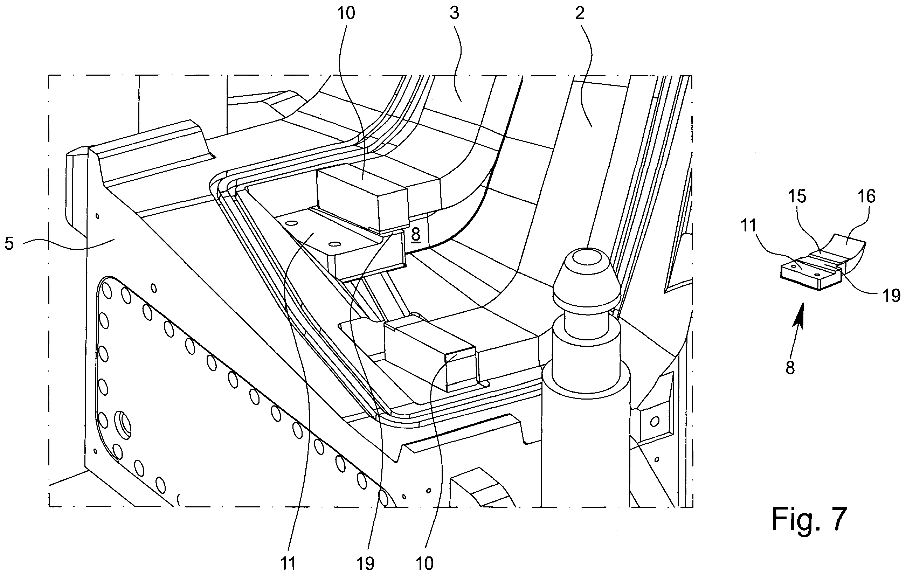

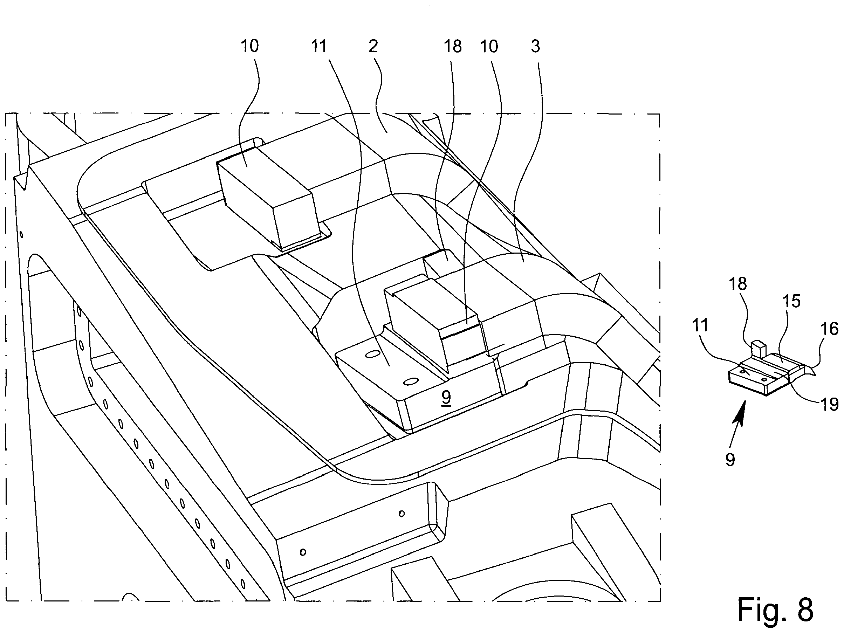

Fig. 5 zeigt das Werkzeugunterteil 5 an dem in Fig. 3 rechts liegenden Ende des Werkzeugs. Fig. 6 zeigt das Werkzeugoberteil 4 an dem in Fig. 2 rechts liegenden Ende des Werkzeugs, und zwar von unten mit Blick auf die Wicklungsstäbe 2, 3. Das Stabende des Wicklungsstabes 2 (Oberlagestab) wird auf der rechten Seite des Werkzeugs durch das Einsatzstück 6 am Werkzeugunterteil 5 und durch das Einsatzstück 7 am Werkzeugoberteil 4 gegengeformt bzw. abgestützt, während der Wicklungsstab 3 auf dieser Seite des Werkzeugs bzw. unmittelbar direkt gegen das Werkzeugunterteil 5 und gegen das Werkzeugoberteil 4 anliegt und kein Einsatzstück vorgesehen ist. Fig. 7 zeigt das Werkzeugunterteil 5 an dem in Fig. 3 links liegenden Ende des Werkzeugs. Fig. 8 zeigt das Werkzeugoberteil 4 an dem in Fig. 2 links liegenden Ende des Werkzeugs, und zwar von unten mit Blick auf die Wicklungsstäbe 2, 3. Das linke Stabende des Wicklungsstabes 2 liegt beim Imprägniervorgang unmittelbar gegen die Werkzeugteile 4, 5 an bzw. wird durch die Werkzeugteile 4, 5 gegengeformt, während das linke Stabende des Wicklungsstabes 3 durch das Einsatzstück 8 am Werkzeugunterteil 5 und durch das Einsatzstück 9 am Werkzeugoberteil 4 gegengeformt bzw. abgestützt wird. Die Einsatzstücke 6 - 9 lassen sich dabei über Laschen 11 mit nicht dargestellten Schrauben an den Werkzeugteilen 4, 5 verschrauben.

Abweichungen der Stabgeometrie bzw. der Stabkontur der Wicklungsstäbe 2, 3 eines Stabsatzes können dazu führen, dass die Positionen bzw. die Lage der Stabenden in den Werkzeugkavitäten des Werkzeugs bei unterschiedlichen Stäben insbesondere in Y-Richtung und in Z-Richtung, d.h. quer zur Längsrichtung X der Wicklungsstäbe 2, 3, voneinander abweichen (Fig. 5). Bei unterschiedlichen Stäben auftretende Abweichungen in Y-Richtung und ggf. in Z-Richtung werden durch die Einsatzstücke 6 - 9 ausgeglichen, so dass es mit einem Werkzeug in einfacher Weise möglich ist, Wicklungsstäbe 2, 3 mit unterschiedlichen Stabgeometrien bzw. Stabkonturen zu imprägnieren. Dies erfordert lediglich die Verwendung von einem oder mehreren der beschriebenen Einsatzstücke 6 - 9, die gleiche oder unterschiedliche Abmessungen und/oder Geometrien aufweisen können.

Jedes Einsatzstück 6 - 9 kann gemäß den Fig. 5 bis 8 einen ersten Auflage- oder Stützabschnitt 15 mit einer zu dem geradlinigen Endabschnitt 14 des Wicklungsstabes 2, 3 komplementären Oberflächengeometrie und/oder Oberflächenkontur und einen daran angrenzenden zweiten Auflage- oder Stützabschnitt 16 mit einer Oberflächengeometrie aufweisen, die komplementär zur Oberflächengeometrie des Wicklungsstabes 2, 3 im Übergangsbereich 17 von dem gekrümmten Bügelabschnitt 13 des Wicklungsstabes 2, 3 zu dem geradlinigen Endabschnitt 14 ist. Damit wird der Wicklungsstab 2, 3 am Stabende ausreichend gegengeformt, um eine hohe Maßhaltigkeit des Verlaufs der Wicklungsstäbe 2, 3 beim Imprägniervorgang sicherzustellen. Die Stabenden können hierbei passgenau gegen die Einsatzstücke 6 - 9 anliegen.

Das Einsatzstück 6 - 9 kann zur Anlage gegen eine innere Flachseite des Stabendes des Wicklungsstabes 2, 3 und/oder zur Anlage seitlich gegen das Stabende ausgebildet sein. Beispielsweise weisen die Einsatzstücke 7, 9 einen Stützabschnitt 18 auf, der beim Imprägniervorgang seitlich gegen das Stabende anliegt. Ein weiterer Abschnitt 19 der Einsatzstücke 6 - 9 kann zum Abstützen der Stabenden im Bereich der Schaltösen 10 ausgebildet sein.

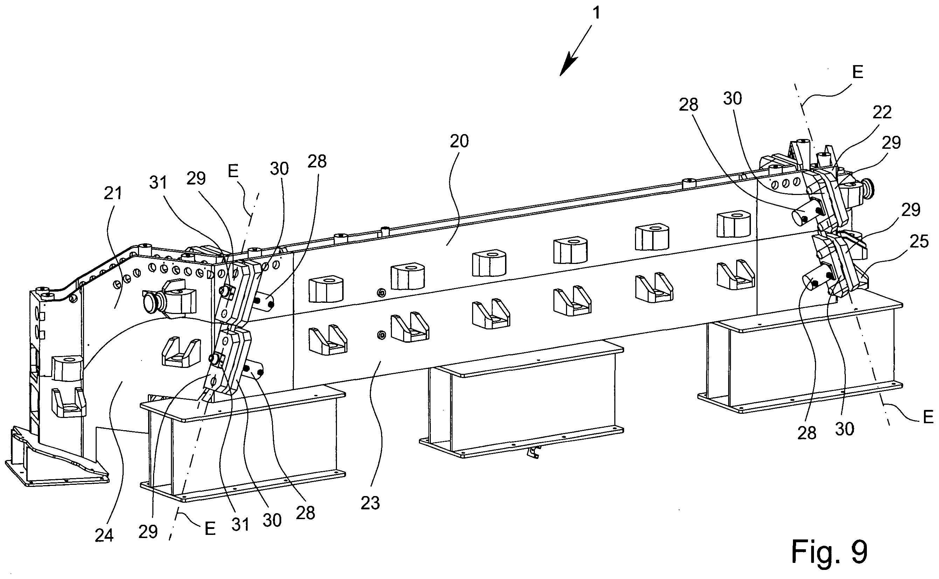

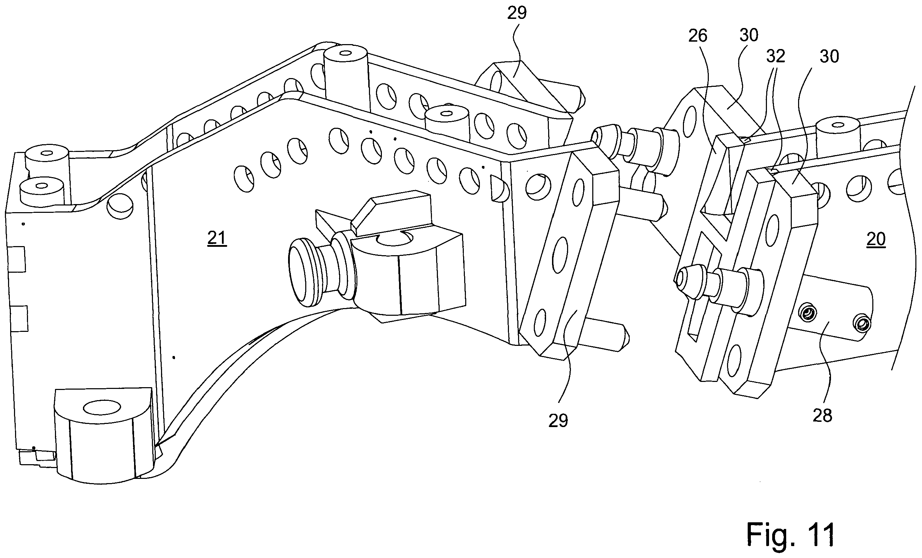

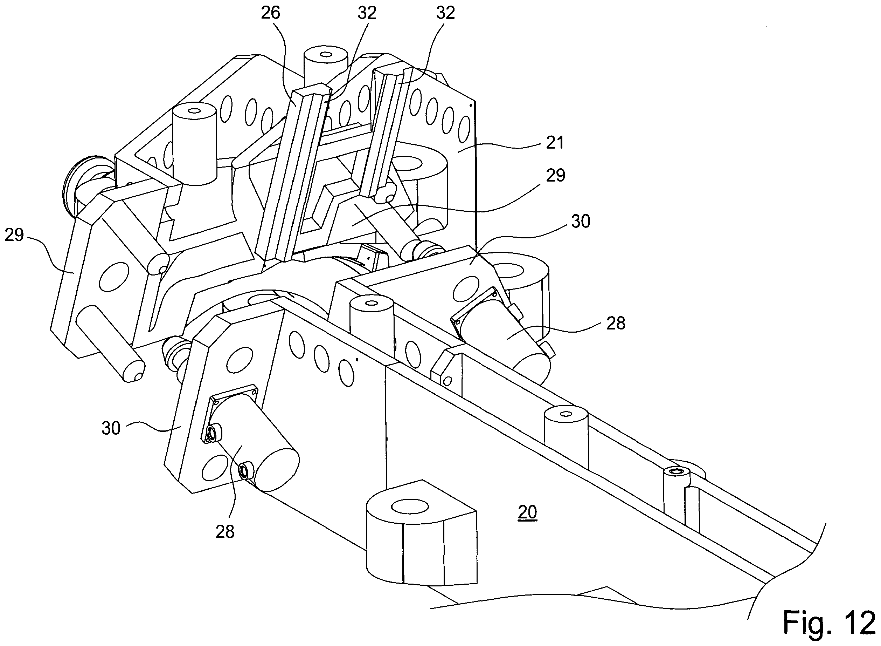

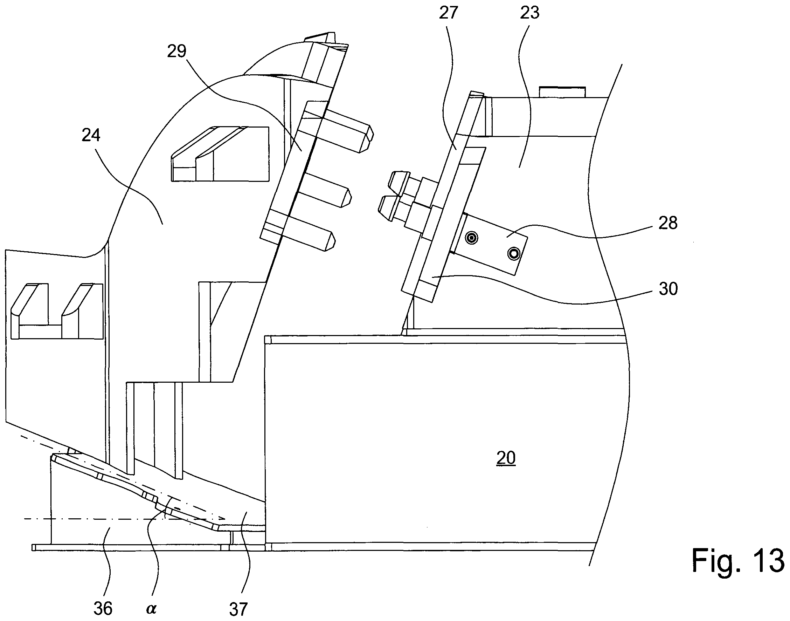

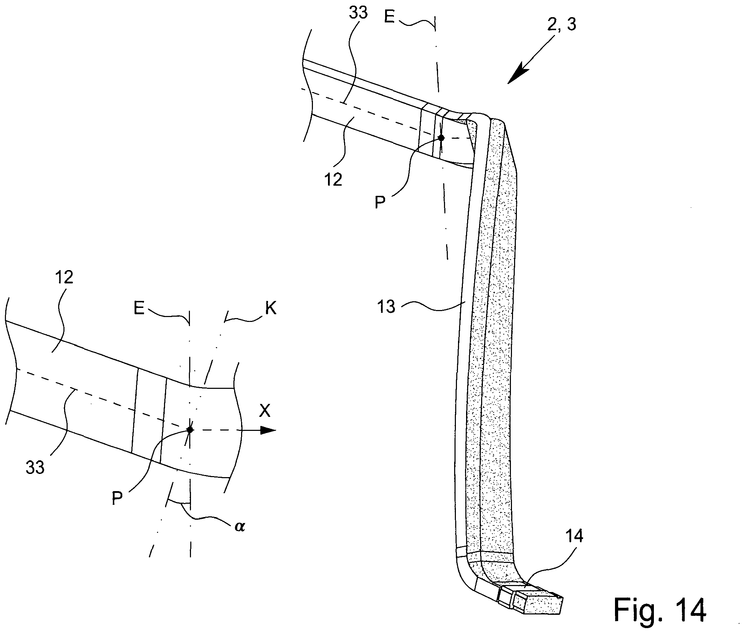

In den Fig. 9 bis 14 ist eine weitere Ausführungsform einer Vorrichtung 1 zum Imprägnieren von Wicklungsstäben gezeigt, mit einem Werkzeug, das als Einzelwerkzeug ausgebildet ist und das das Imprägnieren von Wicklungsstäben 2, 3 mit unterschiedlichen Kegellängen von evolventenförmig oder ähnlich ausgebildeten Bügelabschnitten 13 der Wicklungsstäbe 2, 3 zulässt. Zu diesem Zweck lässt sich die Werkzeugkavität des Werkzeugs in Längsrichtung der Werkzeugkavität bzw. in Richtung der neutralen Faser 33 (Fig. 14) quer zu einer Teilungsebene E verlängern. Bei der dargestellten Ausführungsform weist das Werkzeug ein mittleres Werkzeugoberteil 20 auf, das lösbar mit einem in Fig. 9 links angeordneten zweiten Werkzeugoberteil 21 und lösbar mit einem in Fig. 9 rechts angeordneten dritten Werkzeugoberteil 22 verbunden ist. Im Übrigen ist ein mittleres Werkzeugunterteil 23 vorgesehen, das an dem in Fig. 9 links angeordneten Ende des Werkzeugs mit einem zweiten Werkzeugunterteil 24 und am rechten Ende des Werkzeugs mit einem dritten Werkzeugunterteil 25 lösbar verbunden ist.

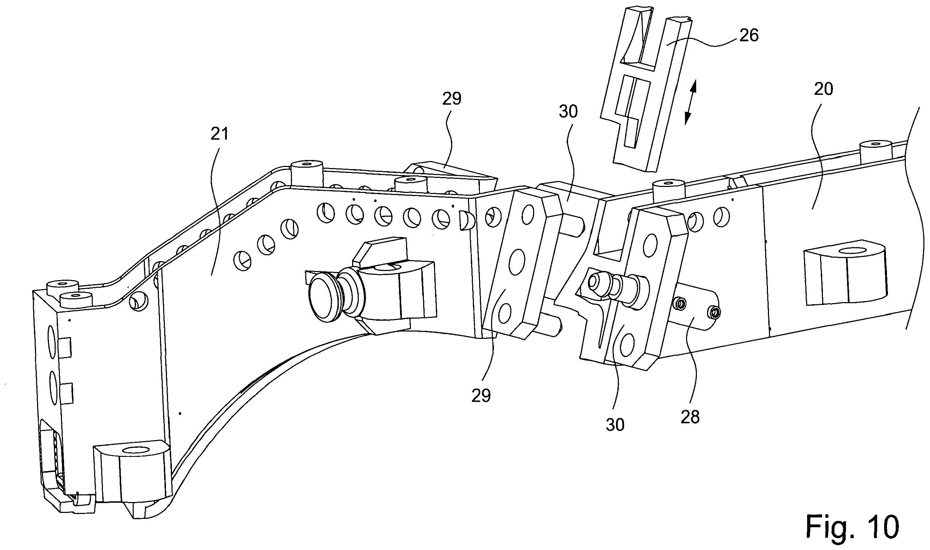

Beim Imprägniervorgang bildet das mittlere Werkzeugoberteil 20 und das mittlere Werkzeugunterteil 23 einen mittleren Teilabschnitt der Werkzeugkavität aus, während die außenliegenden weiteren Werkzeugoberteile 21, 22 und die mit den weiteren Werkzeugoberteilen 21, 22 verbundenen weiteren Werkzeugunterteile 24, 25 linke und rechte Teilabschnitte der Werkzeugkavität ausbilden. Um die Werkzeugkavität des Werkzeugs zu verlängern, lassen sich die außenliegenden weiteren Werkzeugoberteile 21, 22 bedarfsweise vom mittleren Werkzeugoberteil 22 und die weiteren Werkzeugunterteile 24, 25 vom mittleren Werkzeugunterteil 23 trennen, so dass Zwischenstücke 26, 27 zwischen die Werkzeugteile 20 - 25 eingebracht und durch anschließendes Zusammenbringen der Werkzeugteile 20 - 25 zwischen den Werkzeugteilen 20 - 25 verspannt werden können. Dies ist schematisch in den Figuren 10 bis 13 gezeigt.

Zum Verstellen der Werkzeugteile 20 - 25 relativ zueinander sind hydraulische oder pneumatische Kolbenzylindereinheiten 28 an dem mittleren Werkzeugoberteil 20 und an dem mittleren Werkzeugunterteil 23 befestigt. Die Stellkolben der Kolbenzylindereinheiten 28 befinden sich im Betriebszustand des Werkzeugs stets im Eingriff mit Flanschteilen 29 an den außenliegenden weiteren Werkzeugoberteilen 21, 22 und den außenliegenden weiteren Werkzeugunterteilen 24, 25. Die Kolbenzylindereinheiten 28 sind ihrerseits an weiteren Flanschteilen 30 des mittleren Werkzeugoberteils 20 und des mittleren Werkzeugunterteils 23 gehalten. Mit Verschlussschiebern 31 sind die Stellkolben der Zylinderkolbeneinheiten 28 an den Flanschteilen 29 der außenliegenden weiteren Werkzeugoberteile 21, 22 bzw. der außenliegenden weiteren Werkzeugunterteile 24, 25 gesichert bzw. verriegelt. Mit den Kolbenzylindereinheiten 28 ist es in einfacher Weise möglich, die Werkzeugteile 20 - 25 für eine Verlängerung der Werkzeugkavität voneinander zu trennen und nach dem Einsetzen der Zwischenstücke 26, 27 wieder zusammenzubringen, was zu geringen (Um-)Rüstzeiten des Werkzeugs beim Imprägnieren von Wicklungsstäben 2, 3 mit unterschiedlichen Längen führt.

Zum Abdichten der Werkzeugkavität sind Dichtungen 32 vorzugsweise an den Zwischenstücken 26, 27 vorgesehen. Im Übrigen kann eine formschlüssige Verbindung zwischen den Zwischenstücken 26, 27 und den angrenzenden Werkzeugteilen 20 - 25 vorgesehen sein, die dazu führt, dass die Zwischenstücke 26, 27 unverlierbar und sicher insbesondere an den mittleren Werkzeugteilen 20, 23 gehalten sind.

Wie sich aus Fig. 14 ergibt, kann die Teilungsebene E durch einen gekrümmten, insbesondere evolventenförmig oder ähnlich ausgebildeten Abschnitt der Werkzeugkavität verlaufen, der beim Imprägniervorgang den Bügelabschnitt 13 eines Wicklungsstabes aufnimmt. Weiter insbesondere verläuft die Teilungsebene durch den Einsatzpunkt P der Krümmung des gekrümmten Abschnitts der Werkzeugkavität am Ende eines geradlinigen Abschnitts der Werkzeugkavität, wobei der geradlinige Abschnitt beim Imprägniervorgang den Nutabschnitt 12 des Wicklungsstabes 2, 3 aufnimmt. Dies ist schematisch in Fig. 14 für einen Wicklungsstab 2, 3 mit einem geradlinigen Nutabschnitt 12 und einem evolventenförmigen Bügelabschnitt 13 gezeigt, wobei der Bügelabschnitt 13 in einen geradlinigen Endabschnitt 14 übergeht. Der Bügelabschnitt 13 ist eines Wicklungsstabes 2, 3 vorzugsweise auf einer Kegelfläche eines Kegels mit einem Neigungswinkel α in der Größenordnung von 10 - 20° geführt, wobei der Einsatzpunkt P hier dem Kegeleinsatzpunkt entspricht. Ab dem Kegeleinsatzpunkt P geht der Verlauf des Wicklungsstabes 2, 3 von dem geradlinigen Verlauf im Bereich des Nutabschnitts 12 in den gekrümmten Verlauf des Bügelabschnitts 13 über. Die Verlängerung der Werkzeugkavität folgt dem Verlauf der neutralen Faser 33 des Wicklungsstabes 2, 3. Die Trennebene E verläuft senkrecht zum Kegel, um die Kegellänge zu verlängern. Hierdurch ist es mit dem gezeigten Werkzeug möglich, bedarfsweise Wicklungsstäbe 2, 3 mit einer größeren oder kleineren Kegellänge zu imprägnieren. In Fig. 14 ist ein Wicklungsstab 2, 3 mit einer längeren Kegellänge punktiert dargestellt.

Um die Werkzeugunterteile 24, 25 unter Beibehaltung des Neigungswinkels α der Kegelfläche relativ zu dem mittleren Werkzeugunterteil 20 verstellen zu können, sind die weiteren Werkzeugunterteile 24, 25 auf einem Trägerteil 36 entlang einer Schräge 37 verschiebbar bzw. verstellbar angeordnet.

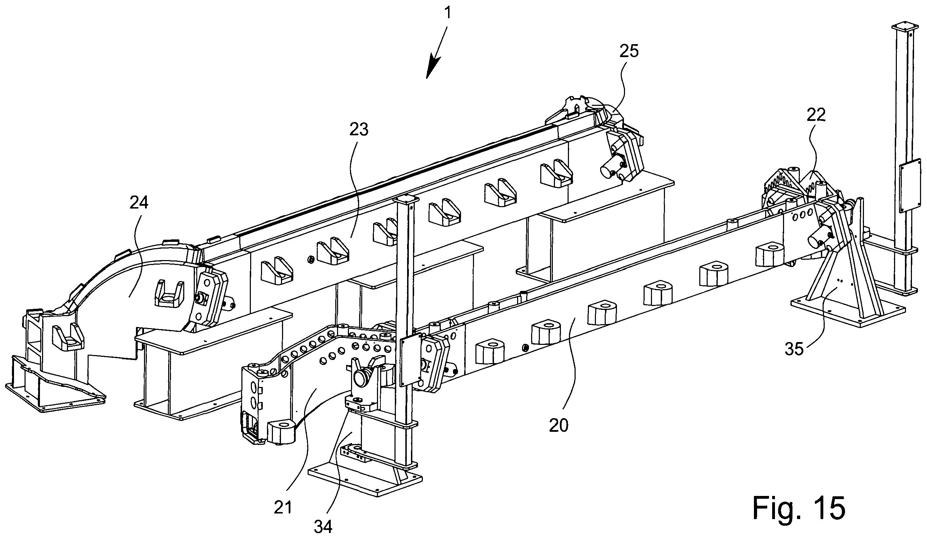

In Fig. 15 ist das in den Fig. 9 bis 13 gezeigte Werkzeug nach dem Abheben des oberen Werkzeugkörpers mit den Werkzeugoberteilen 20 - 22 von dem unteren Werkzeugkörper mit den Werkzeugunterteilen 23 - 25 gezeigt, wobei der obere Werkzeugkörper in ein Drehgestell mit zwei Gestellteilen 34, 35 drehbar eingehängt ist, was die Reinigung des oberen Werkzeugkörpers vereinfacht.

Wie sich im Übrigen aus Fig. 1 ergibt, kann eine Anhebe- und Absenkeinrichtung vorhanden sein, um das Werkzeugoberteil 4 und das Werkzeugunterteil 5 relativ zueinander in der Höhe zu verstellen und dicht miteinander in Verbindung zu bringen. Die Anhebe- und Absenkeinrichtung kann eine Mehrzahl von vorzugsweise seitlich und lediglich an dem Werkzeugunterteil 5 gehaltenen bzw. befestigten hydraulischen oder pneumatischen Kolbenzylindereinheiten 38 mit Stellkolben 39 aufweisen, wobei sich das Werkzeugoberteil 4 von oben mit einem Kran auf die ausgefahrenen Kolben 39 absenken lässt, so dass die Köpfe der Stellkolben 39 entsprechende Bohrungen in seitlichen Halteabschnitten 40 am Werkzeugoberteil 4 durchgreifen und mittels Verschlussschiebern gesichert werden können. Durch anschließendes Absenken der Stellkolben 39 lässt sich das Werkzeugoberteil 4 dicht gegen das Werkzeugunterteil 5 bringen, was den Einsatz entsprechender Dichtmittel zwischen dem Werkzeugoberteil 4 und dem Werkzeugunterteil 5 umfassen kann.

Da die Kolbenzylindereinheiten 38 am Werkzeugunterteil 5 befestigt bzw. gehalten sind, und nicht an Trägerteilen 41 als Werkzeugträger, auf denen das Werkzeug auf dem Untergrund aufsteht, ist eine exakte Höhenverstellbarkeit der Werkzeugteile 4, 5 relativ zueinander auch bei beim Imprägniervorgang und beim anschließenden Abkühlvorgang auftretenden Relativbewegungen zwischen dem Werkzeug und den Trägerteilen 41 möglich. Die Trägerteile 41 können dabei unbefestigt oder befestigt auf dem Boden aufstehen und erfüllen lediglich eine Abstellfunktion. Das Werkzeug kann in diesem Zusammenhang vorzugsweise in Längsrichtung des Werkzeugs schwimmend mit den Trägerteilen 41 verbunden sein, was über Langlöcher und Schraubenverbindungen verwirklicht sein kann. Eine entsprechende Anhebe- und Absenkeinrichtung ist vorzugsweise auch bei einem Werkzeug vorgesehen, wie es in den Fig. 9 bis 13 und 15 dargestellt ist.

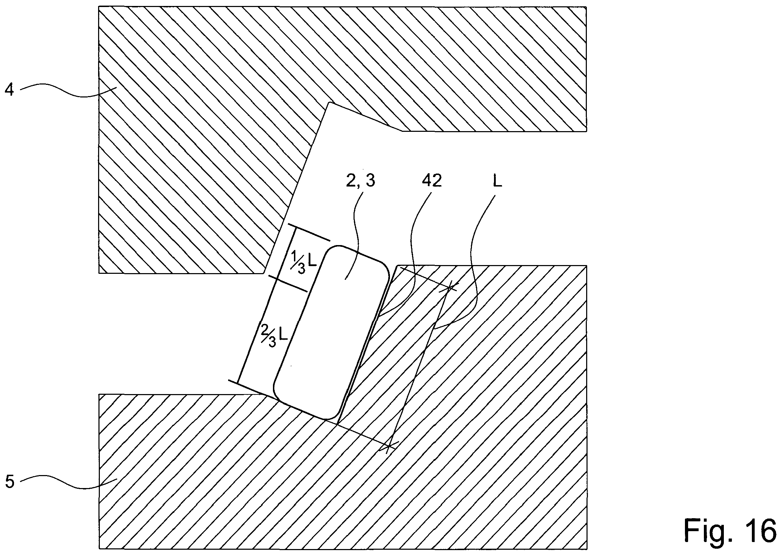

Wie sich schematisch aus Fig. 16 ergibt, kann das Werkzeugoberteil 4 des in Fig. 1 gezeigten Werkzeugs eine Entformungsschräge 42 am Werkzeugunterteil 5 nach dem Verriegeln der Stellkolben 39 an dem Werkzeugoberteil 4 und vor dem Absenken der Stellkolben 39 um ca. ein Drittel überdecken, mit Bezug auf die Länge L der Entformungsschräge 42. Durch den gewählten Abstand können Beschädigungen der Wicklungsstäbe 2, 3 und der Isolierung beim Schließen der Werkzeugteile 4, 5 verhindert werden und es wird eine hohe Stabilität des Werkzeugoberteils 4 nach dem Aufsetzen auf die Stellkolben 39 erreicht. Zudem ist ein kontrolliertes und exaktes Schließen der Werkzeugteile 4, 5 möglich.

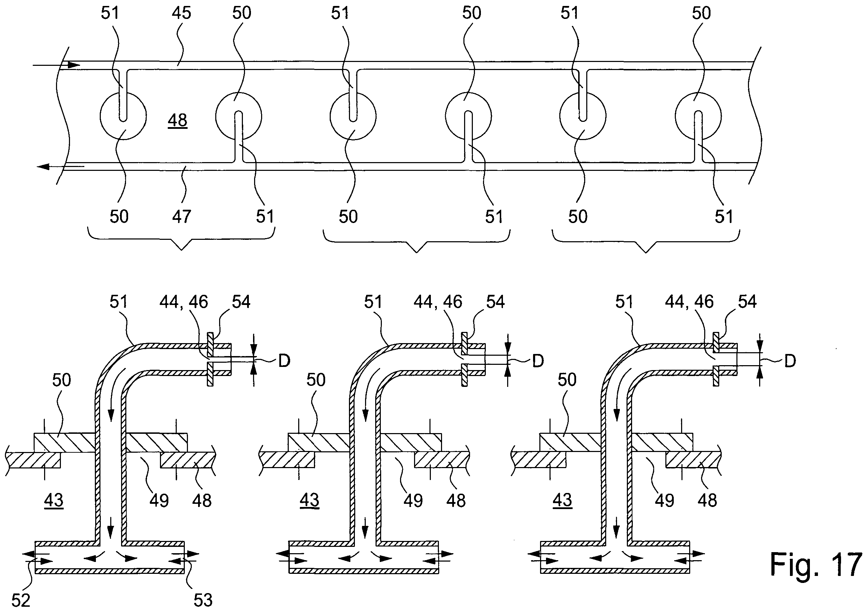

In Fig. 17 ist schematisch ein Heiz- oder Kühlsystem für eine Vorrichtung 1 zum Imprägnieren von Wicklungsstäben 2, 3 gezeigt, wobei in dem Werkzeugoberteil 4 und/oder in dem Werkzeugunterteil 5 jeweils ein Wärmeträgerkanal 43 für ein Wärmeträgermedium, wie ein Thermeöl, vorgesehen ist. Der Wärmeträgerkanal 43 ist über eine Mehrzahl von in Längsrichtung des Werkzeugs nachfolgenden Vorlauföffnungen 44 mit wenigstens einer Vorlaufleitung 45 und über eine Mehrzahl von in Längsrichtung des Werkzeugs nachfolgenden Rücklauföffnungen 46 mit wenigstens einer Rücklaufleitung 47 für das Wärmeträgermedium verbunden. Um eine gleichmäßige Erwärmung oder Abkühlung des Wärmeträgermediums über die Länge des Werkzeugs zu erreichen, ändert sich der Öffnungsdurchmesser der nachfolgenden Vorlauföffnungen 44 und der nachfolgenden Rücklauföffnungen 46 derart, dass ein im Wesentlichen konstantes Volumenstromverhältnis von in den Wärmeträgerkanal 43 einströmendem und aus dem Wärmeträgerkanal 43 ausströmendem Wärmeträgermedium über die Länge des Werkzeugs erreicht wird. Hierbei ist vorzugsweise vorgesehen, dass Vorlauföffnungen 44 und Rücklauföffnungen 46 abwechselnd in Längsrichtung des Werkzeugs nachfolgend angeordnet sind, wobei jeder Vorlauföffnung 44 eine Rücklauföffnung 46 zugeordnet ist und eine Vorlauföffnung 44 und eine dieser Vorlauföffnung 44 zugeordnete Rücklauföffnung 46 dieselben Öffnungsdurchmesser aufweisen und sie paarweise für das Einströmen und Ausströmen des Wärmeträgermediums in den Wärmeträgerkanal 43 zusammenwirken. Der Öffnungsdurchmesser der Vorlauföffnungen 44 und der Rücklauföffnungen 46 ändert sich paarweise, d.h. von einer ersten Vorlauföffnung 44 und einer dieser zugeordneten ersten Rücklauföffnung 46 zu einer nachfolgenden zweiten Vorlauföffnung 44 und der dieser zugeordneten zweiten Rücklauföffnung 46 usw., vorzugsweise über die gesamte Länge des Werkzeugs.

Beispielsweise kann der Wärmeträgerkanal 43 gemäß Fig. 17 eine obere Kanalwand 48 aufweisen, in der Öffnungen 49 vorgesehen sind, die mit Flanschdeckeln 50 verschlossen sind. Durch jeden Flanschdeckel 50 ist eine Leitung 51 geführt, über die der Vorlauf bzw. Zulauf des Wärmeträgermediums in den Wärmeträgerkanal 43 aus der Vorlaufleitung 45 oder der Rücklauf des Wärmeträgermediums aus dem Wärmeträgerkanal 43 in die Rücklaufleitung 47 erfolgt. Die Leitung 51 endet in zwei t-förmig gegenüberliegenden Ein- bzw. Ausströmöffnungen 52, 53 im Inneren des Wärmeträgerkanals 43 für das Wärmeträgermedium.

Schematisch ist in Fig. 17 gezeigt, dass die Leitung 51 mit der Vorlaufleitung 45 bzw. der Rücklaufleitung 47 über eine Ventilscheibe 54 verbunden ist, wobei der Öffnungsdurchmesser D der Ventilscheibe 54, der dem jeweiligen Öffnungsdurchmesser D der Vorlauföffnungen 44 und der Rücklauföffnungen 46 eines Öffnungspaares entspricht, in Strömungsrichtung der Vorlaufleitung 45 von Vorlauföffnung 44 zu Vorlauföffnung 44 zunimmt, um einen gleichmäßigen Eintritt des Wärmeträgermediums in den Wärmeträgerkanal 34 über die gesamte Werkzeuglänge zu ermöglichen. Entsprechendes gilt für die Rücklauföffnungen 46. Damit ist eine gleichmäßige Erwärmung bzw. Abkühlung des Werkzeugoberteils 4 bzw. des Werkzeugunterteils 5 beim Imprägnier- und/oder beim anschließenden Abkühlvorgang sichergestellt, was zu einer hohen Güte bei der Imprägnierung der Wicklungsstäbe 2, 3 beiträgt.

**Bezugszeichenliste:**

| | | | |
|---|---|---|---|
| 1 | Vorrichtung | 36 | Trägerteil |
| 2 | Wicklungsstab | 37 | Schräge |
| 3 | Wicklungsstab | 38 | Kolbenzylindereinheit |
| 4 | Werkzeugoberteil | 39 | Stellkolben |
| 5 | Werkzeugunterteil | 40 | Halteabschnitt |
| 6 | Einsatzstück | 41 | Trägerteil |
| 7 | Einsatzstück | 42 | Entformungsschräge |
| 8 | Einsatzstück | 43 | Wärmeträgerkanal |
| 9 | Einsatzstück | 44 | Vorlauföffnung |
| 10 | Schaltöse | 45 | Vorlaufleitung |
| 11 | Lasche | 46 | Rücklauföffnung |
| 12 | Nutabschnitt | 47 | Rücklaufleitung |
| 13 | Bügelabschnitt | 48 | Kanalwand |
| 14 | Endabschnitt | 49 | Öffnung |
| 15 | Auflage-/ und Stützabschnitt | 50 | Flanschdeckel |
| 16 | Auflage-/ und Stützabschnitt | 51 | Leitung |
| 17 | Übergangsbereich | 52 | Ein- und Austrittsöffnung |
| 18 | Stützabschnitt | 53 | Ein- und Austrittsöffnung |
| 19 | weiterer Auflage-/ und Stützabschnitt | 54 | Ventilscheibe |
| 20 | mittleres Werkzeugoberteil | | |
| 21 | zweites Werkzeugoberteil | | |
| 22 | drittes Werkzeugoberteil | | |
| 23 | mittleres Werkzeugunterteil | | |
| 24 | zweites Werkzeug unterteil | | |
| 25 | drittes Werkzeugunterteil | | |
| 26 | Zwischenstück | | |
| 27 | Zwischenstück | | |
| 28 | Kolbenzylindereinheit | | |
| 29 | Flanschteil | | |
| 30 | Flanschteil | | |
| 31 | Verschlussschieber | | |
| 32 | Dichtung | | |
| 33 | neutrale Faser | | |
| 34 | Gestellteil | | |
| 35 | Gestellteil | | |

## Patentansprüche

1. Vorrichtung (1) zum Imprägnieren von wenigstens einem eine Isolierung aufweisenden Wicklungsstab (2, 3) für eine elektrische Maschine, mit einem wenigstens ein Werkzeugoberteil (4) und wenigstens ein Werkzeugunterteil (5) aufweisenden Werkzeug zur Aufnahme von wenigstens einem Wicklungsstab (2, 3) in wenigstens einer im miteinander verbundenen Zustand von Werkzeugoberteil (4) und Werkzeugunterteil (5) vorhanden Werkzeugkavität, wobei der Wicklungsstab einen Nutabschnitt und außen wenigstens einseitig einen Bügelabschnitt aufweist, wobei das freie Ende des Bügelabschnitts ein Stabende definiert, wobei die Werkzeugkavität evakuierbar ist, wobei die Werkzeugkavität für einen Imprägniervorgang des Wicklungsstabes (2, 3) mit einem Imprägniermittel befüllbar ist und wobei das Werkzeug den Wicklungsstab (2, 3) beim Imprägniervorgang formschlüssig umgibt, **dadurch gekennzeichnet, dass** wenigstens ein lösbar mit dem Werkzeugoberteil (4) oder dem Werkzeugunterteil (5) verbindbares Einsatzstück (6 - 9) für das Stabende des Bügelabschnitts des Wicklungsstabes (2, 3) in wenigstens einem beim Imprägniervorgang das Stabende aufnehmenden Abschnitt der Werkzeugkavität vorgesehen ist, wobei das Einsatzstück (6 - 9) eine bereichsweise zur Oberflächengeometrie des Stabendes komplementäre Oberflächengeometrie aufweist und wobei das Stabende beim Imprägniervorgang gegen das Einsatzstück (6 - 9) anliegt und über das Einsatzstück (6 - 9) an dem Werkzeugoberteil (4) oder an dem Werkzeugunterteil (5) gegengeformt ist.

2. Vorrichtung (1) nach Anspruch 1, **dadurch gekennzeichnet, dass** das Einsatzstück einen ersten Auflageabschnitt (15) mit einer zu einem geradlinigen Endabschnitt (14) des Wicklungsstabes (2, 3) komplementären Oberflächengeometrie und einen daran angrenzenden zweiten Auflageabschnitt (16) mit einer Oberflächengeometrie aufweist, die komplementär zur Oberflächengeometrie des Wicklungsstabes (2, 3) im Übergangsbereich von einem gekrümmten, insbesondere evolventenförmig oder ähnlich ausgebildeten Bügelabschnitt (13) des Wicklungsstabes (2, 3) zu dem geradlinigen Endabschnitt (14) des Wicklungsstabes (2, 3) ist.

3. Vorrichtung (1) nach einem der vorhergehenden Ansprüche, **dadurch gekennzeichnet, dass** das Werkzeug wenigstens zwei im Bereich einer Teilungsebene (E) des Werkzeugs lösbar miteinander verbundene und in Längsrichtung des Werkzeugs nebeneinanderliegend angeordnete Werkzeugoberteile (20 - 22) und wenigstens zwei lösbar miteinander verbundene und in Längsrichtung des Werkzeugs nebeneinanderliegend angeordnete Werkzeugunterteile (23 - 25) aufweist, wobei im Bereich der Teilungsebene (E) lösbar miteinander verbundene Werkzeugoberteile (20 - 22) und Werkzeugunterteile (23 - 25) Teilabschnitte der Werkzeugkavität des Werkzeugs bilden und wobei die Werkzeugkavität des Werkzeugs durch Einbringen von wenigstens einem Zwischenstück (26, 27) zwischen benachbarte Werkzeugoberteile (20 - 22) und/oder zwischen benachbarte Werkzeugunterteile (23 - 25) in Längsrichtung der Werkzeugkavität verlängerbar ausgebildet ist.

4. Vorrichtung (1) nach Anspruch 3, **dadurch gekennzeichnet, dass** die Teilungsebene (E) durch einen gekrümmten, insbesondere evolventenförmig oder ähnlich ausgebildeten Abschnitt der Werkzeugkavität, der beim Imprägniervorgang einen Bügelabschnitt (13) des Wicklungsstabes (2, 3) aufnimmt, verläuft.

5. Vorrichtung (1) nach Anspruch 3 oder 4, **dadurch gekennzeichnet, dass** die Teilungsebene (E) durch den Einsatzpunkt (P) der Krümmung eines gekrümmten Abschnitts der Werkzeugkavität am Ende eines geradlinigen Abschnitts der Werkzeugkavität, der beim Imprägniervorgang einen Nutabschnitt (12) des Wicklungsstabes (2, 3) aufnimmt, verläuft.

6. Vorrichtung (1) nach einem der vorhergehenden Ansprüche 3 bis 5, **dadurch gekennzeichnet, dass** eine Verstelleinrichtung vorhanden und benachbarte Werkzeugoberteile (20 - 22) und/oder benachbarte Werkzeugunterteile (23 - 25) mit der Verstelleinrichtung relativ zueinander verstellbar und dicht miteinander in Verbindung bringbar sind, wobei die Verstelleinrichtung eine Mehrzahl von an den Werkzeugoberteilen (20 - 22) und/oder an den Werkzeugunterteilen (23 - 25) gehaltene Linearantriebe aufweist.

7. Vorrichtung (1) nach einem der vorhergehenden Ansprüche, **dadurch gekennzeichnet, dass** eine Anhebe- und Absenkeinrichtung vorhanden und das Werkzeugoberteil (4) und das Werkzeugunterteil (5) mit der Anhebe- und Absenkeinrichtung relativ zueinander höhenverstellbar und dicht miteinander in Verbindung bringbar sind, wobei die Anhebe- und Absenkeinrichtung eine Mehrzahl von an dem Werkzeugoberteil (4) und/oder an dem Werkzeugunterteil (5) gehaltene Linearantriebe aufweist.

8. Vorrichtung (1) nach Anspruch 7, **dadurch gekennzeichnet, dass** eine Mehrzahl von hydraulischen oder pneumatischen Kolbenzylindereinheiten (38) an dem Werkzeugunterteil (5) gehalten ist und dass das Werkzeugoberteil (4) von oben auf ausgefahrene Stellkolben (39) der Kolbenzylindereinheiten (38) absenkbar und nach dem Verriegeln der Stellkolben (39) an dem Werkzeugoberteil (4) durch Absenken der Stellkolben (39) dicht gegen das Werkzeugunterteil (5) bringbar ist.

9. Vorrichtung (1) nach einem der vorhergehenden Ansprüche, **dadurch gekennzeichnet, dass** in dem Werkzeugoberteil (4) und/oder in dem Werkzeugunterteil (5) jeweils ein Wärmeträgerkanal (43) für ein Wärmeträgermedium vorgesehen ist, wobei der Wärmeträgerkanal (43) über eine Mehrzahl von in Längsrichtung des Werkzeugs nachfolgende Vorlauföffnungen (44) mit wenigstens einer Vorlaufleitung (45) und über eine Mehrzahl von in Längsrichtung des Werkzeugs nachfolgende Rücklauföffnungen (46) mit wenigstens einer Rücklaufleitung (47) für das Wärmeträgermedium verbunden ist.

10. Vorrichtung (1) nach Anspruch 9, **dadurch gekennzeichnet, dass** sich der Durchmesser (D) der nachfolgenden Vorlauföffnungen (44) und/oder der nachfolgenden Rücklauföffnungen (46) in Längsrichtung des Werkzeugs derart ändert, dass ein im wesentlichen konstantes Volumenstromverhältnis von in den Wärmeträgerkanal einströmenden und aus dem Wärmeträgerkanal ausströmendem Wärmeträgermedium über die Länge des Werkzeugs erreicht wird

## Claims

1. A device (1) for impregnating at least one insulated winding bar (2, 3) for an electric machine, comprising a tool having at least one upper tool part (4) and at least one lower tool part (5) for receiving at least one winding bar (2, 3) in at least one tool cavity present when the upper tool part (4) and lower tool part (5) are connected to one another, wherein the winding bar comprises a groove portion and, on the outside at least on one side, a bracket portion, wherein the free end of the bracket portion defines an end of the bar, wherein the tool cavity can be evacuated, wherein, for an impregnation process, the tool cavity of the winding bar (2, 3) can be filled with an impregnating agent, and wherein the tool surrounds the winding bar (2, 3) in a form-fitting manner during the impregnation process, **characterised in that** at least one insert part (6-9), which can be releasably connected to the upper tool part (4) or the lower tool part (5), is provided for the end of the bar of the bracket portion of the winding bar (2, 3) in at least one portion of the tool cavity which receives the end of the bar during the impregnation process, wherein the insert part (6-9) has a surface geometry which in some regions is complementary to the surface geometry of the end of the bar, and wherein during the impregnation process the end of the bar bears against the insert part (6-9) and can be given a matching shape by means of the insert part (6-9) on the upper tool part (4) or on the lower tool part (5).

2. The device (1) according to claim 1, **characterised in that** the insert part comprises a first bearing portion (15) having a surface geometry that is complementary to a straight end portion (14) of the winding bar (2, 3), and comprises an adjacent second bearing portion (16) having a surface geometry that is complementary to the surface geometry of the winding bar (2, 3) in the transition region from a curved, in particular involute-shaped or similarly shaped, bracket section (13) of the winding bar (2, 3) to the straight end portion (14) of the winding bar (2, 3).

3. The device (1) according to any one of the preceding claims, **characterised in that** the tool comprises at least two upper tool parts (20-22) in the region of a dividing plane (E) of the tool, which are releasably connected to each other and are arranged adjacently in the longitudinal direction of the tool, and at least two lower tool parts (23-25), which are releasably connected to each other and are arranged adjacently in the longitudinal direction of the tool, wherein, in the region of the dividing plane (E), upper tool parts (20-22) and lower tool parts (23-25) that are detachably connected to each other form part portions of the tool cavity of tool and wherein the tool cavity of the tool is designed to be extendable in the longitudinal direction of the tool cavity by introducing at least one intermediate part (26, 27) between neighbouring upper tool parts (20-22) and/or between neighbouring lower tool parts (23-25).

4. The device (1) according to claim 3, **characterised in that** the dividing plane (E) extends through a curved, in particular involute-shaped or similarly shaped, portion of the tool cavity, which receives a bracket portion (13) of the winding bar (2, 3) during the impregnation process.

5. The device (1) according to claim 3 or 4, **characterised in that** the dividing plane (E) extends through the point of onset (P) of curvature of a curved portion of the tool cavity at the end of a straight portion of the tool cavity, which receives a groove portion (12) of the winding bar (2, 3) during the impregnation process.

6. The device (1) according to one of preceding claims 3 to 5, **characterised in that** an adjustment device is present and neighbouring upper tool parts (20-22) and/or neighbouring lowered tool parts (23-25) can be adjusted relative to each other using the adjustment device and can be connected tightly to each other, wherein the adjustment device comprises a plurality of linear drives held on the upper tool parts (20-22) and/or on the lower tool parts (23-25).

7. The device (1) according to any one of the preceding claims, **characterised in that** a lifting and lowering device is present and the upper tool part (4) and the lower tool part (5) can be vertically adjusted relative to each other using the lifting and lowering device and can be connected tightly to each other, wherein the lifting and lowering device comprises a plurality of linear drives held on the upper tool part (4) and/or on the lower tool part (5).

8. The device (1) according to claim 7, **characterised in that** a plurality of hydraulic or pneumatic piston cylinder units (38) are held on the upper tool part (5) and **in that** the upper tool part (4) can be lowered from above onto the extended actuating pistons (39) of the piston cylinder units (38) and, after locking of the actuating pistons (39) on the upper tool part (4), can be brought tightly against the lower tool part (5) by lowering the actuating pistons (39).

9. The device (1) according to any one of the preceding claims, **characterised in that** a heat transfer channel (43) for a heat transfer medium is provided in each of the upper tool part (4) and/or the lower tool part (5), wherein the heat transfer channel (43) is connected, via a plurality of successive forward flow openings (44) in the longitudinal direction of the tool, to a forward flow line (45) and, via a plurality of successive return flow openings (46) in the longitudinal direction of the tool, to at least one return flow line (47) for the heat transfer medium.

10. The device (1) according to claim 9, **characterised in that** the diameter (D) of the successive forward flow openings (44) and/or successive return flow openings (46) in the longitudinal direction of the tool, change in such a way that a substantially constant volume flow ratio of heat transfer medium flowing into the transfer channel and heat transfer medium flowing out of the heat transfer channel is attained over the length of the tool.

## Revendications

1. Dispositif (1) permettant l'imprégnation d'au moins une barre d'enroulement (2, 3) comprenant une isolation pour un moteur électrique, comprenant un moule présentant au moins une partie supérieure (4) de moule et au moins une partie inférieure (5) de moule destiné à loger au moins une barre d'enroulement (2, 3) dans au moins une cavité de moule présente lorsque la partie supérieure (4) de moule et la partie inférieure (5) de moule sont reliées, la barre d'enroulement présentant une partie encoche et sur l'extérieur, au moins d'un côté, une partie étrier, l'extrémité libre de la partie étrier définissant une extrémité de barre, la cavité de moule pouvant être évacuée, la cavité de moule pouvant être remplie pour une procédure d'imprégnation de la barre d'enroulement (2, 3) avec un agent d'imprégnation et le moule entourant la barre d'enroulement (2, 3) par coopération de formes au cours d'une procédure d'imprégnation, **caractérisé en ce qu'**au moins un insert (6 - 9) pouvant être relié de manière détachable à la partie supérieure (4) de moule ou à la partie inférieure (5) de moule est conçu pour l'extrémité de barre de la partie étrier de la barre d'enroulement (2, 3) dans au moins une partie de la cavité de moule logeant l'extrémité de barre lors de la procédure d'imprégnation, l'insert (6 - 9) présentant une géométrie de surface complémentaire par endroits de la géométrie de surface de l'extrémité de barre et l'extrémité de barre, au cours de la procédure d'imprégnation, reposant contre l'insert (6 - 9) et étant contreformée sur la partie supérieure (4) du moule ou la partie inférieure (5) du moule par l'intermédiaire de l'insert (6 - 9).

2. Dispositif (1) selon la revendication 1, **caractérisé en ce que** l'insert présente une première partie d'appui (15) avec une géométrie de surface complémentaire d'une partie terminale droite (14) de la barre d'enroulement (2, 3) et une seconde partie d'appui (16) qui lui est adjacente avec une géométrie de surface, qui est complémentaire de la géométrie de surface de la barre d'enroulement (2, 3) dans la zone de transition entre une section étrier (13) de la barre d'enroulement (2, 3) courbe, en particulier en forme de développante ou formée de manière similaire et la section terminale droite (14) de la barre d'enroulement (2, 3).

3. Dispositif (1) selon une des revendications précédentes, **caractérisé en ce que** le moule présente au moins deux parties supérieures (20 - 22) de moule disposées l'une à côté de l'autre dans la direction longitudinale du moule, reliées l'une à l'autre de manière détachable dans la zone d'un plan de séparation (E) du moule et au moins deux parties inférieures (23 - 25) de moule disposées l'une à côté de l'autre dans la direction longitudinale du moule et reliées l'une à l'autre de manière détachable, dans la zone du plan de séparation (E) les parties supérieures (20 - 22) et les parties inférieures (23 - 25) de moule reliées l'une à l'autre de manière détachable formant des parties partielles de la cavité de moule du moule et la cavité de moule du moule étant formée de manière prolongeable par l'introduction d'au moins une pièce intermédiaire (26, 27) entre des parties supérieures (20 - 22) de moule voisines et/ou entre des parties inférieures (23 - 25) de moule voisines dans la direction longitudinale de la cavité de moule.

4. Dispositif (1) selon la revendication 3, **caractérisé en ce que** le plan de séparation (E) s'étend à travers une partie courbe, en particulier en forme de développante ou formée de manière similaire de la cavité de moule, qui loge une partie étrier (13) de la barre d'enroulement (2, 3) au cours de la procédure d'imprégnation.

5. Dispositif (1) selon la revendication 3 ou 4, **caractérisé en ce que** le plan de séparation (E) s'étend à travers le point de départ (P) de la courbure d'une partie courbe de la cavité de moule au niveau de l'extrémité d'une partie droite de la cavité de moule, qui loge une partie encoche (12) de la barre d'enroulement (2, 3) au cours de la procédure d'imprégnation.

6. Dispositif (1) selon une des revendications précédentes 3 à 5, **caractérisé en ce qu'**un dispositif de déplacement est présent et **en ce que** des parties supérieures (20 - 22) de moule voisines et/ou des parties inférieures (23 - 25) de moule voisines peuvent être déplacées l'une par rapport à l'autre avec le dispositif de déplacement et peuvent être placées en contact l'une avec l'autre de manière étanche, le dispositif de déplacement présentant une pluralité d'entraînements linéaires retenus sur les parties supérieures (20 - 22) de moule et/ou sur les parties inférieures (23 - 25) de moule.

7. Dispositif (1) selon une des revendications précédentes, **caractérisé en ce qu'**un dispositif d'élévation et d'abaissement est disponible et **en ce que** la partie supérieure (4) et moule et la partie inférieure (5) de moule peuvent être déplacées en hauteur l'une par rapport à l'autre avec le dispositif d'élévation et d'abaissement et peuvent être placées en contact l'une avec l'autre de manière étanche, le dispositif d'élévation et d'abaissement présentant une pluralité d'entraînements linéaires retenus sur la partie supérieure (4) de moule et/ou sur la partie inférieure (5) de moule.

8. Dispositif (1) selon la revendication 7, **caractérisé en ce qu'**une pluralité d'unités à piston-cylindre hydrauliques ou pneumatiques (38) est retenue sur la partie inférieure (5) de moule et **en ce que** la partie supérieure (4) de moule peut être abaissée depuis le haut dans une position sortie du piston de réglage (39) de l'unité à piston-cylindre (38) et après le verrouillage du piston de réglage (39) sur la partie supérieure (4) de moule le piston de réglage (39) peut être placé par abaissement en contact de manière étanche contre la partie inférieure (5) de moule.

9. Dispositif (1) selon une des revendications précédentes, **caractérisé en ce qu'**un canal caloporteur (43) est présent dans la partie supérieure (4) de moule et/ou dans la partie inférieure (5) de moule, respectivement pour un fluide caloporteur, le canal caloporteur (43) étant relié, par l'intermédiaire d'une pluralité d'ouvertures aller (44) disposées l'une après l'autre dans la direction longitudinale du moule, avec au moins une conduite aller (45) et, par l'intermédiaire d'une pluralité d'ouverture retour (46) disposées l'une après l'autre dans la direction longitudinale du moule, avec au moins une conduite retour (47) pour le fluide caloporteur.

10. Dispositif (1) selon la revendication 9, **caractérisé en ce que** le diamètre (D) des ouvertures aller (44) se suivant et/ou des ouvertures retour (46) se suivant dans la direction longitudinale du moule varie de telle sorte qu'un rapport des débits essentiellement constant entre le fluide caloporteur entrant dans le canal caloporteur et le fluide caloporteur sortant du canal caloporteur soit atteint sur la longueur du moule.
